(19) Europäisches Patentamt
European Patent Office
Office européen des brevets

(11) **EP 4 716 212 A1**

(12) **EUROPEAN PATENT APPLICATION**
published in accordance with Art. 153(4) EPC

(43) Date of publication:
**25.03.2026 Bulletin 2026/13**

(51) International Patent Classification (IPC):
**H04N 19/117** (2014.01)

(21) Application number: **24810192.5**

(52) Cooperative Patent Classification (CPC):
**H04N 19/117; G06N 3/0464; G06N 3/048;
G06N 3/08; H04N 19/124; H04N 19/136;
H04N 19/172; H04N 19/176; H04N 19/82;
H04N 19/85; H04N 19/86;** H04N 19/159

(22) Date of filing: **06.05.2024**

(86) International application number:
**PCT/CN2024/091116**

(87) International publication number:
**WO 2024/239945 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.05.2023 CN 202310576341**

(71) Applicant: **Tencent Technology (Shenzhen)
Company Limited
Shenzhen, Guangdong 518057 (CN)**

(72) Inventors:
• **CHANG, Renjie
Shenzhen, Guangdong 518057 (CN)**
• **WANG, Liqiang
Shenzhen, Guangdong 518057 (CN)**

(74) Representative: **EP&C
P.O. Box 3241
2280 GE Rijswijk (NL)**

(54) **FILTERING METHOD, ENCODING METHOD, DECODING METHOD, APPARATUS, COMPUTER-READABLE MEDIUM AND ELECTRONIC DEVICE**

(57) Provided in the embodiments of the present application are a filtering method, an encoding method, a decoding method, an apparatus, a computer-readable medium and an electronic device. The filtering method based on a neural network comprises: generating input data of a neural network filter on the basis of an image to be filtered, wherein the input data at least includes the image to be filtered; inputting the input data into the neural network filter, wherein the neural network filter includes a residual unit for extracting image feature information, the residual unit includes a plurality of residual blocks which are connected in sequence, and a first residual block among the plurality of residual blocks includes a plurality of convolution layers which are arranged in parallel and have different convolution kernel sizes; and acquiring a filtered image which is output by means of the neural network filter for the image to be filtered. By means of the technical solution provided in the embodiments of the present application, the effect of filtering can be improved while reducing the operation complexity of a neural network filter, thereby facilitating an improvement in the encoding and decoding efficiency of a video.

Acquire input data of an NNLF, the input data containing at least an image to be filtered — S710

Input the input data into the NNLF, the NNLF including a first residual unit configured to extract image feature information, the first residual unit including a plurality of sequentially connected residual blocks, and a first residual block among the plurality of residual blocks including a plurality of parallel convolution layers with different convolution kernel sizes — S720

Acquire a filtered image output by the NNLF through processing the image to be filtered — S730

FIG. 7

**Description**

RELATED APPLICATION

This application claims priority to Chinese Patent Application No. 202310576341.2, entitled "FILTERING, CODING, AND DECODING METHODS AND APPARATUSES, COMPUTER-READABLE MEDIUM, AND ELECTRONIC DEVICE" filed with the China National Intellectual Property Administration on May 19, 2023, which is incorporated by reference in its entirety.

FIELD OF THE TECHNOLOGY

This application relates to the technical field of computers and communications, and in particular to filtering, coding, and decoding methods and apparatuses, a computer-readable medium, and an electronic device.

BACKGROUND OF THE DISCLOSURE

In the field of video coding and decoding, after a reconstructed image is generated by superimposing a predicted image and a reconstructed residual image, distortion occurs in the reconstructed image. To acquire an image with a relatively good quality, loop filtering usually needs to be performed on the reconstructed image. During the loop filtering, how to improve the filtering effect to improve the coding and decoding efficiency is a technical problem that needs to be resolved urgently.

SUMMARY

Embodiments of this application provide filtering, coding, and decoding methods and apparatuses, a computer-readable medium, and an electronic device, which may improve the filtering effect while reducing the operation complexity of a neural network loop filter (NNLF), thereby facilitating improving the video coding and decoding efficiency.

Other characteristics and advantages of this application become apparent through the following detailed descriptions, or may be partially learned through the practice of this application.

According to an aspect of the embodiments of this application, a filtering method based on a neural network is provided, including the following operations: acquiring input data of an NNLF, the input data including at least an image to be filtered; inputting the input data into the NNLF, the NNLF including a first residual unit configured to extract image feature information, the first residual unit including a plurality of sequentially connected residual blocks, and a first residual block among the plurality of residual blocks including a plurality of parallel convolution layers with different convolution kernel sizes; and acquiring a filtered image output by the NNLF through processing the image to be filtered.

According to an aspect of the embodiments of this application, a video coding method is provided, including the following operations: acquiring input data of an NNLF, the input data including at least a reconstructed image to be filtered; inputting the input data into the NNLF, the NNLF including a first residual unit configured to extract image feature information, the first residual unit including a plurality of sequentially connected residual blocks, and a first residual block among the plurality of residual blocks including a plurality of parallel convolution layers with different convolution kernel sizes; acquiring a filtered image output by the NNLF through processing the reconstructed image; and generating a predicted image corresponding to a next frame of image based on the filtered image, and coding the next frame of image based on the predicted image corresponding to the next frame of image.

According to an aspect of the embodiments of this application, a video decoding method is provided, including the following operations: acquiring input data of an NNLF, the input data including at least a reconstructed image to be filtered; inputting the input data into the NNLF, the NNLF including a first residual unit configured to extract image feature information, the first residual unit including a plurality of sequentially connected residual blocks, and a first residual block among the plurality of residual blocks including a plurality of parallel convolution layers with different convolution kernel sizes; acquiring a filtered image output by the NNLF through processing the reconstructed image; and generating a predicted image corresponding to a next frame of image based on the filtered image, and decoding a video bitstream based on the predicted image corresponding to the next frame of image.

According to an aspect of the embodiments of this application, a filtering apparatus based on a neural network is provided, including: a generation unit configured to acquire input data of an NNLF, the input data including at least an image to be filtered; a processing unit configured to input the input data into the NNLF, the NNLF including a first residual unit configured to extract image feature information, the first residual unit including a plurality of sequentially connected residual blocks, and a first residual block among the plurality of residual blocks including a plurality of parallel convolution layers with different convolution kernel sizes; and an acquisition unit configured to acquire a filtered image output by the NNLF through processing the image to be filtered.

According to an aspect of the embodiments of this application, a video coding apparatus is provided, including: a generation unit configured to acquire input data of an NNLF, the input data including at least a reconstructed image; a processing unit configured to input the input data into the NNLF, the NNLF including a first residual unit configured to extract image feature information, the first residual unit including a plurality of sequentially connected residual blocks, and a first residual block among the plurality of residual blocks including a plurality of parallel convolution layers with different convolution kernel sizes; an acquisition unit configured to acquire a filtered image output by the NNLF through processing the reconstructed image; and a coding unit (CU) configured to generate a predicted image corresponding to a next frame of image based on the filtered image, and code the next frame of image based on the predicted image corresponding to the next frame of image.

According to an aspect of the embodiments of this application, a video decoding apparatus is provided, including: a generation unit configured to acquire input data of an NNLF, the input data including at least a to-be-filtered reconstructed image; a processing unit configured to input the input data into the NNLF, the NNLF including a first residual unit configured to extract image feature information, the first residual unit including a plurality of sequentially connected residual blocks, and a first residual block among the plurality of residual blocks including a plurality of parallel convolution layers with different convolution kernel sizes; an acquisition unit configured to acquire a filtered image output by the NNLF through processing the reconstructed image; and a decoding unit configured to generate a predicted image corresponding to a next frame of image based on the filtered image, and decode a video bitstream based on the predicted image corresponding to the next frame of image.

According to an aspect of the embodiments of this application, a computer-readable medium is provided, having a computer program stored therein, the computer program, when executed by a processor, implementing the methods as described in the foregoing embodiments.

According to an aspect of the embodiments of this application, an electronic device is provided, including: one or more processors; and a storage apparatus configured to store one or more computer programs, the one or more computer programs, when executed by the one or more processors, causing the electronic device to implement the methods as described in the foregoing embodiments.

According to an aspect of the embodiments of this application, a computer program product is provided, including a computer program. The computer program is stored in a computer-readable storage medium. A processor of an electronic device reads the computer program from the computer-readable storage medium and executes the computer program to cause the electronic device to perform the methods provided in the foregoing embodiments.

In the technical solutions provided in some embodiments of this application, the NNLF contains residual units, the residual unit includes a plurality of sequentially connected residual blocks, and at least one of the plurality of residual blocks includes a plurality of parallel convolution layers with different convolution kernel sizes so that the NNLF may acquire feature information on a multi-scale receptive field through the residual block, thereby improving the generalization capability of the NNLF. In addition, the filtering effect may be improved while reducing the operation complexity of the NNLF, thereby facilitating improving the video coding and decoding efficiency.

The foregoing general descriptions and the following detailed descriptions are merely for illustration and explanation purposes and are not intended to limit this application.

BRIEF DESCRIPTION OF THE DRAWINGS

FIG. 1 is a schematic diagram of an exemplary system architecture to which technical solutions in embodiments of this application may be applied.

FIG. 2 is a schematic diagram of arrangement modes of a video coding apparatus and a video decoding apparatus in a streaming system.

FIG. 3 is a basic flowchart of a video coder.

FIG. 4 is a schematic diagram of filtering based on a convolutional neural network loop filter (CNNLF).

FIG. 5 is a schematic diagram of filtering a luma component and a chroma component.

FIG. 6 is a schematic diagram of filtering a luma component and a chroma component.

FIG. 7 is a flowchart of a filtering method based on a neural network according to some embodiments of this application.

FIG. 8 is a schematic structural diagram of a residual block according to some embodiments of this application.

FIG. 9 is a schematic diagram of a decomposition mode of canonical polyadic decomposition (CPD).

FIG. 10 is a schematic structural diagram of a residual block according to some embodiments of this application.

FIG. 11 is a flowchart of a video coding method according to some embodiments of this application.

FIG. 12 is a flowchart of a video decoding method according to some embodiments of this application.

FIG. 13 is a schematic structural diagram of an NNLF according to some embodiments of this application.

FIG. 14 is a schematic structural diagram of a residual block according to some embodiments of this application.

FIG. 15 is a schematic structural diagram of a residual block according to some embodiments of this application.

FIG. 16 is a schematic structural diagram of a residual block according to some embodiments of this application.

FIG. 17 is a schematic structural diagram of a residual block according to some embodiments of this application.

FIG. 18 is a block diagram of a filtering apparatus based on a neural network according to some embodiments of this application.

FIG. 19 is a block diagram of a video coding apparatus according to some embodiments of this application.

FIG. 20 is a block diagram of a video decoding apparatus according to some embodiments of this application.

FIG. 21 is a schematic structural diagram of a computer system of an electronic device adapted to implement an embodiment of this application.

DESCRIPTION OF EMBODIMENTS

Exemplary implementations are now described in a more comprehensive manner with reference to the accompanying drawings. However, the exemplary implementations may be implemented in various forms and are not to be understood as being limited to these examples. On the contrary, the purpose of providing these implementations is to make this application more comprehensive and complete and to fully convey the concept of the exemplary implementations to a person skilled in the art.

In addition, the features, structures, or characteristics described in this application may be combined in one or more embodiments in any appropriate manner. The following description has many specific details so that the embodiments of this application may be fully understood. However, a person skilled in the art is to be aware that technical solutions of this application may be implemented without using all detailed features in the embodiments, one or more particular details may be omitted, or other methods, elements, apparatuses, or operations may be used.

The block diagrams shown in the accompanying drawings are merely functional entities and do not necessarily correspond to physically independent entities. That is, these functional entities may be implemented in a software form, or in one or more hardware modules or integrated circuits, or in different networks and/or processor apparatuses and/or microcontroller apparatuses.

The flowcharts shown in the accompanying drawings are merely exemplary descriptions, do not need to include all content and operations/steps, and do not need to be performed in the described orders either. For example, some operations/steps may be further divided, while some operations/steps may be combined or partially combined. Therefore, an actual execution order may change according to an actual case.

"A plurality of" mentioned in the specification refers to two or more. "And/or" describes an association relationship of associated objects and represents that three relationships may exist. For example, A and/or B may represent the following three cases: only A exists, both A and B exist, and only B exists. The character "/" generally represents an "or" relationship between the associated objects.

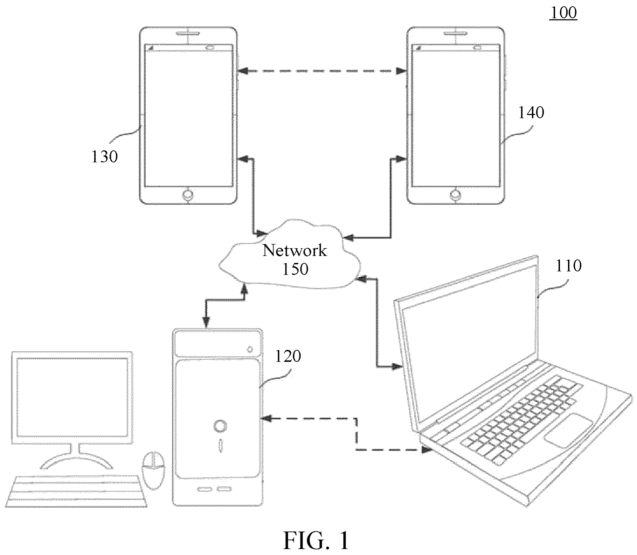

FIG. 1 is a schematic diagram of an exemplary system architecture to which technical solutions in embodiments of this application may be applied.

As shown in FIG. 1, a system architecture 100 includes a plurality of terminal apparatuses. The terminal apparatuses may communicate with each other through, for example, a network 150. For example, the system architecture 100 may include a first terminal apparatus 110 and a second terminal apparatus 120 that are connected to each other through the network 150. In the embodiment of FIG. 1, the first terminal apparatus 110 and the second terminal apparatus 120 perform unidirectional data transmission.

For example, the first terminal apparatus 110 may code video data (for example, a video picture stream acquired by the terminal apparatus 110) for transmission to the second terminal apparatus 120 through the network 150, and coded video data is transmitted in the form of one or more coded video bitstreams. The second terminal apparatus 120 may receive the coded video data from the network 150, decode the coded video data to restore the video data, and display a video picture according to the restored video data.

In some embodiments of this application, the system architecture 100 may include a third terminal apparatus 130 and a fourth terminal apparatus 140 that perform bidirectional transmission of the coded video data. The bidirectional transmission may occur, for example, during a video conference. For bidirectional data transmission, one of the third terminal apparatus 130 and the fourth terminal apparatus 140 may code video data (for example, a video picture stream acquired by the terminal apparatus) for transmission to the other of the third terminal apparatus 130 and the fourth terminal apparatus 140 through the network 150. One of the third terminal apparatus 130 and the fourth terminal apparatus 140 may further receive coded video data transmitted by the other of the third terminal apparatus 130 and the fourth terminal apparatus 140, decode the coded video data to restore the video data, and display the video picture on an accessible display apparatus according to the restored video data.

In the embodiment of FIG. 1, the first terminal apparatus 110, the second terminal apparatus 120, the third terminal apparatus 130, and the fourth terminal apparatus 140 may be servers, personal computers, and smart phones, but the principles disclosed in this application are not limited thereto. The embodiment disclosed in this application is adapted to a laptop computer, a tablet computer, a media player, and/or a dedicated video conference device. The network 150 represents any number of networks that transmit the coded video data among the first terminal apparatus 110, the second terminal apparatus 120, the third terminal apparatus 130, and the fourth terminal apparatus 140, and include, for example, wired and/or wireless communication networks. The communication network 150 may exchange data in circuit-switched and/or packet-switched channels. The network may include a telecommunication network, a local area network, a wide area network, and/or the Internet. For the purposes of this application, unless explained below, the architecture and topology of the network 150 may be immaterial to operations disclosed in this application.

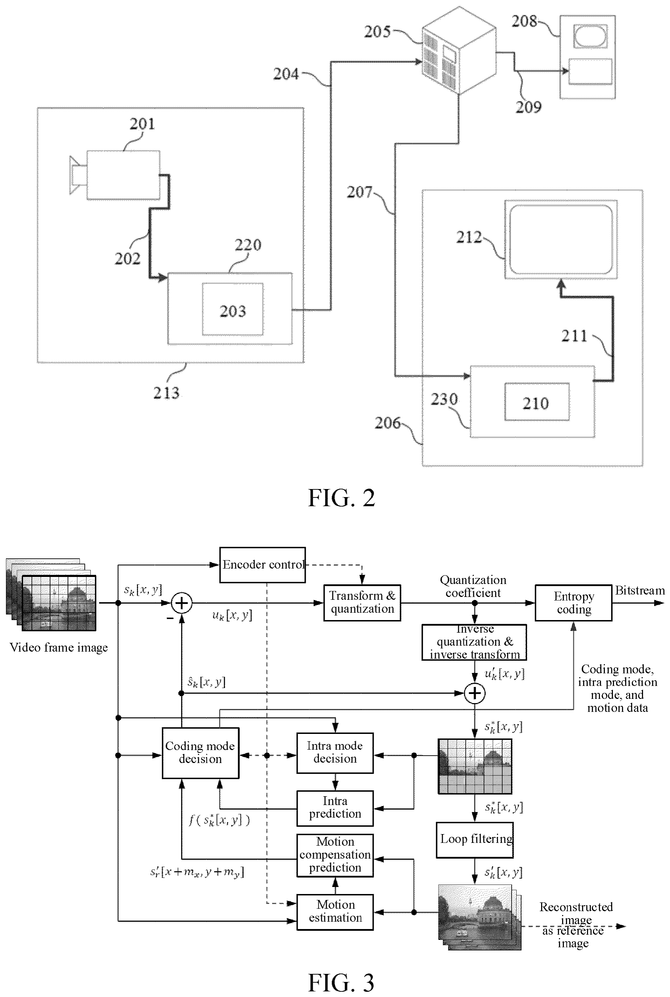

In some embodiments of this application, FIG. 2 shows arrangement modes of a video coding apparatus and a video decoding apparatus in a streaming environment. The subject disclosed in this application may be equally applicable to other video-enabled applications, including, for example, video conferencing, a digital television (TV), and storing of compressed videos on digital media including a compact disc (CD), a digital video disc (DVD), a memory stick, and the like.

A streaming system may include an acquisition subsystem 213. The acquisition subsystem 213 may include a video source 201 such as a digital camera. The video source creates a video picture stream 202 that is uncompressed. In this embodiment, the video picture stream 202 includes samples photographed by the digital camera. Compared with coded video data 204 (or a coded video bitstream 204), the video picture stream 202 is depicted as a bold line to emphasize a video picture stream with a high data volume. The video picture stream 202 may be processed by an electronic apparatus 220. The electronic apparatus 220 includes a video coding apparatus 203 coupled to the video source 201. The video coding apparatus 203 may include hardware, software, or a combination of software and hardware, to implement or carry out aspects of the disclosed subject described below in more details. Compared with the video picture stream 202, the coded video data 204 (or the coded video bitstream 204) is depicted as a thin line to emphasize the coded video data 204 (or the coded video bitstream 204) with a low data volume, which may be stored on a streaming server 205 for future use. One or more streaming client subsystems, such as a client subsystem 206 and a client subsystem 208 in FIG. 2, may access the streaming server 205 to retrieve a copy 207 and a copy 209 of the coded video data 204. The client subsystem 206 may include, for example, a video decoding apparatus 210 in an electronic apparatus 230. The video decoding apparatus 210 decodes the incoming copy 207 of the coded video data and generates an output video picture stream 211 that may be presented on a display 212 (for example, a display screen) or another presentation apparatus. In some streaming systems, the coded video data 204, video data 207, and video data 209 (for example, the video bitstream) may be coded according to some video coding/compression standards.

The electronic apparatus 220 and the electronic apparatus 230 may include other assemblies not shown. For example, the electronic apparatus 220 may include a video decoding apparatus, and the electronic apparatus 230 may further include a video coding apparatus.

In some embodiments of this application, international video coding standards such as high efficiency video coding (HEVC) and versatile video coding (VVC) and the Chinese national video coding standard such as an audio video coding standard (AVS) are used as examples. After a video frame image is inputted, the video frame image is divided into several non-overlapping processing units according to a block size, and a similar compression operation is performed on each processing unit. The processing unit is referred to as a coding tree unit (CTU) or a largest coding unit (LCU). The CTU may be further divided into one or more basic CUs. The CU is the most basic element in a coding process.

Some concepts during coding of the CU are described below.

Predictive coding: the predictive coding includes modes such as intra prediction and inter prediction. After an original video signal is predicted by a selected reconstructed video signal, a residual video signal is obtained. A coder side needs to determine a predictive coding mode to be selected for a current CU, and inform a decoder side. The intra prediction refers to that a predicted signal comes from a region that has been coded and reconstructed in the same image. The inter prediction refers to that the predicted signal comes from another image (referred to as a reference image) that has been coded and is different from a current image.

Transform & quantization: after transform operations such as discrete Fourier transform (DFT) and discrete cosine transform (DCT) are performed on the residual video signal, the signal is converted into a transform domain, which is referred to as a transform coefficient. A lossy quantization operation is further performed on the transform coefficient, and some information is lost so that the quantized signal facilitates compressed expression. In some video coding standards, more than one transform manners may be selected. Therefore, the coder side also needs to select one of the transform manners for the current CU and inform the decoder side.

Fineness of the quantization is generally determined by a quantization parameter (QP). A larger value of the QP indicates that coefficients in a larger value range are to be quantized into the same output, which may generally bring greater distortion and a lower bit rate. On the contrary, a smaller value of the QP indicates that coefficients in a smaller value range are to be quantized into the same output, which may generally bring less distortion and correspond to a higher bit rate.

Entropy coding or statistical coding: statistical compression coding is performed on the quantized transform domain signal according to a frequency of occurrence of each value, and finally a binarized (0 or 1) compressed bitstream is output. Meanwhile, entropy coding also needs to be performed on other information generated through coding, for example, a selected coding mode and motion vector data, to reduce the bit rate. Statistical coding is a lossless coding mode that may effectively reduce a bit rate required to express the same signal. A common statistical coding mode includes variable length coding (VLC) or context adaptive binary arithmetic coding (CABAC).

A CABAC process mainly includes 3 operations: binarization, context modeling, and binary arithmetic coding. After binarization is performed on an inputted syntax element, binary data may be coded in a normal coding mode and a bypass coding mode. The bypass coding mode does not need to assign a specific probability model to each binary bit, and an inputted binary bit bin value is directly coded using a simple bypass coder to accelerate the entire coding and decoding process. In general, different syntax elements are not completely independent, and the same syntax elements have memory properties. Therefore, according to a conditional entropy theory, using other coded syntax elements for conditional coding can further improve the coding performance compared with independent coding or memoryless coding. Such coded symbolic information that is used as a condition is referred to as a context. In the regular coding mode, binary bits of a syntax element sequentially enter a context modeler. The coder assigns a suitable probability model for each inputted binary bit according to a value of a previously coded syntax element or binary bit. This process is referred to as context modeling. A context model corresponding to the syntax element may be located through a context index increment (ctxIdxInc) and a context index start (ctxIdxStart). After the bin value and the assigned probability model are transmitted together into a binary arithmetic coder for coding, the context model needs to be updated according to the bin value. This is an adaptive process in the coding.

Loop filtering: operations such as inverse quantization, inverse transform, and predictive compensation are performed on a transformed and quantized signal to obtain a reconstructed image. The reconstructed image has some information different from that in an original image as a result of quantization, that is, distortion may occur in the reconstructed image. Therefore, a filtering operation may be performed on the reconstructed image. For example, filters such as a deblocking filter (DB), a sample adaptive offset (SAO) filter, or an adaptive loop filter (ALF) are used so that a degree of distortion caused by quantization may be effectively reduced. Since the filtered reconstructed images are to be used as a reference for subsequently coded images to predict future image signals, the foregoing filtering operation is alternatively referred to as loop filtering, i.e., a filtering operation in a coding loop.

In some embodiments of this application, FIG. 3 is a basic flowchart of a video coder. In this procedure, intra prediction is used as an example for description. A difference operation is performed on an original image signal $s_k[x, y]$ and a predicted image signal $\hat{s}_k[x, y]$ to obtain a residual signal $u_k[x, y]$. The residual signal $u_k[x, y]$ is transformed and quantized to obtain a quantization coefficient. Entropy coding is performed on the quantization coefficient to obtain a coded bitstream. In addition, inverse quantization and inverse transform are performed to obtain a reconstructed residual signal $u'_k[x, y]$. The predicted image signal $\hat{s}_k[x, y]$ and the reconstructed residual signal $u'_k[x, y]$ are superimposed to generate a reconstructed image signal $s^*_k[x, y]$. The reconstructed image signal $s^*_k[x, y]$ is inputted into an intra mode decision module and an intra prediction module for intra prediction. In addition, the reconstructed image signal $s^*_k[x, y]$ is filtered through loop filtering, and a filtered image signal $s'_k[x, y]$ is output. The filtered image signal $s'_k[x, y]$ may be used as a reference image of a next frame for motion estimation and motion compensation prediction. Then, a predicted image signal $\hat{s}_k[x, y]$ of the next frame is obtained based on a motion compensation prediction result $s'_r[x + m_x, y + m_y]$ and an intra prediction result $f(s^*_k[x, y])$. The foregoing process is repeated until the coding is completed.

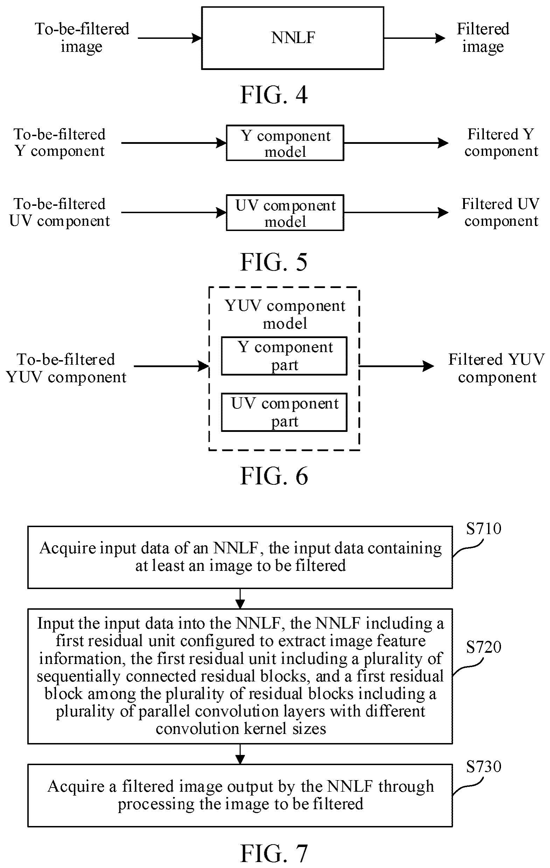

The foregoing loop filtering may be implemented based on an NNLF. As shown in FIG. 4, after training of the NNLF is completed, an image to be filtered may be inputted into the trained NNLF to obtain a filtered image. The NNLF usually uses a loss function to constrain the filtered image so that the filtered image is restored to an original image as much as possible. The loss function measures a difference between a predicted value and a true value. A larger loss value between the predicted value and the true value indicates a larger difference. A training target is to reduce the loss value. In some embodiments, during training, the NNLF may construct a loss function of a model using an L1 norm loss function and/or an L2 norm loss function.

To flexibly process a luma component and a chroma component of an image separately, the NNLF may further use a separation of luma and chroma (SLC) method.

For example, as shown in FIG. 5, a luma component (Y) and a chroma component (Cb and Cr) each construct an NNLF using different network structures. In addition, during training, different filter models may be separately trained for the luma component (Y) and the chroma component (Cb and Cr) to improve the filtering performance for the luma component and the chroma component. As shown in FIG. 6, in the same network structure model, a luma component and a chroma component are separately processed using different modules in a network.

In video coding and decoding based on a neural network, the NNLF provided in the related art usually builds an overall network structure based on basic modules such as $3 \times 3$ convolution and residual blocks, to train the NNLF. For the network structure of the NNLF, repeatedly stacked $3 \times 3$ convolution and residual blocks can bring appreciable coding performance, but excessively high operation complexity is introduced. Limiting the number of repetitions of the $3 \times 3$ convolution and residual blocks, i.e., constraining the operation complexity, makes it difficult to achieve high coding and decoding performance. Therefore, the technical solutions of the embodiments of this application provide a new filtering solution based on a neural network, which may acquire relatively high coding performance without introducing excessive complexity, thereby facilitating improving the video coding and decoding efficiency.

The neural network belongs to the category of artificial intelligence (AI). AI involves a theory, a method, a technology, and an application system that use a digital computer or a machine controlled by the digital computer to simulate, extend, and expand human intelligence, perceive an environment, acquire knowledge, and use knowledge to obtain an optimal result. In other words, AI is a comprehensive technology of computer science and attempts to understand the essence of intelligence and produce a new intelligent machine that can react in a manner similar to human intelligence. AI is to study the design principles and implementation methods of various intelligent machines to enable the machines to have the functions of perception, reasoning, and decision-making.

The AI technology is a comprehensive discipline and relates to a wide range of fields including both hardware-level technologies and software-level technologies. Basic AI technologies generally include technologies such as a sensor, a dedicated AI chip, cloud computing, distributed storage, a big data processing technology, an operating/interaction system, and electromechanical integration. AI software technologies mainly include several major directions such as a computer vision technology, a speech processing technology, a nature language processing technology, machine learning (ML)/deep learning, automatic driving, and intelligent transportation.

The ML belongs to multi-field interdiscipline and relates to a plurality of disciplines such as the probability theory, statistics, approximation theory, convex analysis, and algorithm complexity theory. The ML specializes in studying how a computer simulates or implements a human learning behavior to obtain new knowledge or skills, and reorganize an existing knowledge structure, so as to keep improving its performance. The ML is the core of AI, is a basic way to make the computer intelligent, and is applied to various fields of AI. The ML and the deep learning generally include technologies such as an artificial neural network, a confidence network, reinforcement learning, transfer learning, inductive learning, and learning from demonstration. The NNLF in this embodiment of this application is a filter based on ML/deep learning.

Implementation details of the technical solution of this embodiment of this application are described in detail in the following.

FIG. 7 is a flowchart of a filtering method based on a neural network according to some embodiments of this application. The filtering method based on a neural network may be performed by a device having a computing processing function, such as a terminal device or a server. Referring to FIG. 7, the filtering method based on a neural network includes at least operation S710 to operation S730. A detailed description is as follows.

Operation S710: Acquire input data of an NNLF, the input data including at least an image to be filtered.

In some embodiments of this application, the image to be filtered may be an image obtained by decoding by a video playback client, or may be an image obtained by photographing. Alternatively, the image to be filtered may be a to-be-filtered reconstructed image, i.e., an image generated by superimposing a reconstructed residual image obtained after inverse quantization and inverse transform and a predicted image. For example, in the procedure shown in FIG. 3, the reconstructed image is an image signal $s_k^*[x, y]$ generated by superimposing the predicted image signal $\hat{s}_k[x, y]$ and the reconstructed residual signal $u'_k[x, y]$.

In some embodiments, the input data of the NNLF may further include at least one piece of the following information: boundary strength information, a slice-level QP (i.e., sliceQP), a basic QP (i.e., baseQP), a frame type of the image to be filtered, and a predicted image corresponding to the image to be filtered when the image to be filtered is a reconstructed image.

The frame type of the image to be filtered is configured for indicating whether the reconstructed image is an I frame, a P frame, or a B frame. In the procedure shown in FIG. 3, the predicted image corresponding to the reconstructed image is $\hat{s}_k[x, y]$.

Operation S720: Input the input data into the NNLF, the NNLF including a first residual unit configured to extract image feature information, the first residual unit including a plurality of sequentially connected residual blocks, and a first residual block among the plurality of residual blocks including a plurality of parallel convolution layers with different convolution kernel sizes.

In this embodiment of this application, since the first residual block contains the plurality of convolution layers that are provided in parallel and have different convolution kernel sizes, the NNLF may acquire feature information on a multi-scale receptive field through the first residual block, thereby improving the generalization capability of the NNLF. In addition, the filtering effect may be improved while reducing the operation complexity of the NNLF, thereby facilitating improving the video coding and decoding efficiency.

In a convolutional neural network, a size of a region in which a single element of each network layer output feature map is mapped to an input feature map is a receptive field. If convolution window sizes (i.e., convolution kernel sizes) are different, the number of elements of the processed input feature map is also different. That is, convolution layers having different convolution kernel sizes usually have different receptive field sizes.

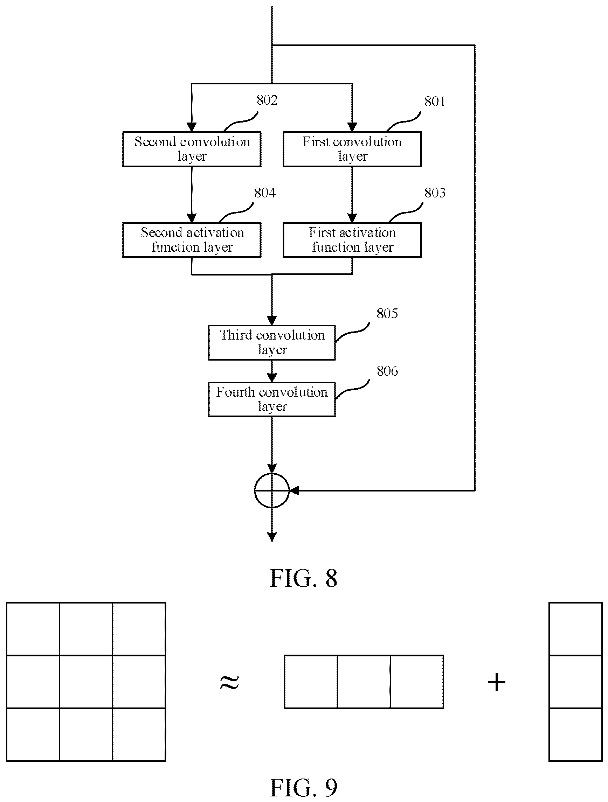

In some embodiments, as shown in FIG. 8, the plurality of convolution layers may include: a first convolution layer 801 and a second convolution layer 802. The first residual block further includes a first activation function layer 803 connected to the first convolution layer 801, a second activation function layer 804 connected to the second convolution layer 802, and a third convolution layer 805 and a fourth convolution layer 806 sequentially connected. An input end of the first convolution layer 801 is connected to an input end of the second convolution layer 802 and used as an input end of the first residual block, and an output end of the first activation function layer 803 is connected to an output end of the second activation function layer 804 and then connected to an input end of the third convolution layer 805. Input data of the first residual block and output data of the fourth convolution layer 806 are superimposed as output data of the first residual block.

A first activation function and a second activation function may each be a parametric rectified linear unit (PReLU), a rectified linear unit (ReLU), a Gaussian error linear unit (GeLU), or the like.

In some embodiments, a convolution kernel size of the first convolution layer is $n \times n$. A convolution kernel size of the second convolution layer is $m \times m$, m and n are positive integers, and $m \neq n$. For example, the convolution kernel size of the first convolution layer is $3 \times 3$, and the convolution kernel size of the second convolution layer is $1 \times 1$. In other embodiments of this application, values of m and n may be, for example, 1, 3, 5, or 7.

In some embodiments, the first convolution layer includes: two sub-convolution layers obtained by decomposing the convolution layer having the convolution kernel size of $n \times n$ through tensor decomposition. The convolution kernel size of the second convolution layer is $m \times m$, m and n are positive integers, and $m \neq n$.

In some embodiments, the tensor decomposition may adopt CPD. CPD is a classic tensor decomposition manner and may be used in a neural network to reduce a convolution calculation amount. As shown in FIG. 9, according to the CPD principle, a $3 \times 3$ convolution may be approximately represented by a $1 \times 3$ convolution and a $3 \times 1$ convolution, thereby effectively reducing the complexity of a convolution operation without significantly reducing the network performance.

In some embodiments, the two sub-convolution layers obtained by decomposing the convolution layer having the convolution kernel size of $n \times n$ through tensor decomposition may include: a convolution layer having a convolution kernel size of $1 \times n$, and a convolution layer having a convolution kernel size of $n \times 1$.

In some embodiments, the first convolution layer includes: two sub-convolution layers obtained by decomposing the convolution layer having the convolution kernel size of $n \times n$ through depth-wise separable convolution (DSC). The convolution kernel size of the second convolution layer is $m \times m$, m and n are positive integers, and $m \neq n$. For example, the convolution kernel size of the first convolution layer is $3 \times 3$, and the convolution kernel size of the second convolution layer is $1 \times 1$. In other embodiments of this application, values of m and n may be, for example, 1, 3, 5, or 7.

The DSC is an improvement algorithm of the standard convolution. First, channels are separately convolved using a given convolution kernel size, and results are combined. This part is referred to as depth-wise convolution. Subsequently, in the DSC, ordinary/standard convolution is performed using a $1 \times 1$ convolution kernel, and a feature image is output. This part is referred to as pointwise convolution. The DSC may effectively reduce the complexity of the convolution operation.

In some embodiments, the two sub-convolution layers obtained by decomposing the convolution layer having the convolution kernel size of $n \times n$ through DSC include: a convolution layer having a convolution kernel size of $n \times n$ and performing group convolution, and a convolution layer having a convolution kernel size of $1 \times 1$.

In some embodiments, the first convolution layer includes: three sub-convolution layers obtained by decomposing the convolution layer having the convolution kernel size of $n \times n$ through tensor decomposition and DSC. The convolution kernel size of the second convolution layer is $m \times m$, m and n are positive integers, and $m \neq n$. For example, the convolution kernel size of the first convolution layer is $3 \times 3$, and the convolution kernel size of the second convolution layer is $1 \times 1$. In other embodiments of this application, values of m and n may be, for example, 1, 3, 5, or 7.

In some embodiments, the convolution layer having the convolution kernel size of $n \times n$ may be first decomposed through the DSC to obtain the convolution layer having the convolution kernel size of $n \times n$ and performing group convolution, and the convolution layer having the convolution kernel size of $1 \times 1$. Then, through

the tensor decomposition, the convolution layer having the convolution kernel size of n × n and performing group convolution is decomposed into a convolution layer having a convolution kernel size of 1 × n and performing group convolution, and a convolution layer having a convolution kernel size is n × 1 and performing group convolution.

In some embodiments, the foregoing fourth convolution layer may be a convolution layer having a convolution kernel size of k × k, where k is an integer greater than or equal to 1 and may be, for example, 1, 3, 5, or 7. Alternatively, the foregoing fourth convolution layer may be a plurality of sub-convolution layers obtained by decomposition through the tensor decomposition and/or the DSC. For example, the fourth convolution layer may include two sub-convolution layers obtained by decomposing the convolution layer having the convolution kernel size of k × k through the tensor decomposition, and convolution kernel sizes of the two sub-convolution layers may be 1 × k and k × 1, respectively. Alternatively, the fourth convolution layer may include two sub-convolution layers obtained by decomposing the convolution layer having the convolution kernel size of k × k through the DSC. The two sub-convolution layers may be a convolution layer having a convolution kernel size of k × k and performing group convolution, and a convolution layer having a convolution kernel size of 1 × 1. Alternatively, the fourth convolution layer includes three sub-convolution layers obtained by decomposing the convolution layer having the convolution kernel size of k × k through the tensor decomposition and the DSC. The three sub-convolution layers may be a convolution layer having a convolution kernel size of 1 × k and performing group convolution, a convolution layer having a convolution kernel size of k × 1 and performing group convolution, and a convolution layer having a convolution kernel size of 1 × 1.

In some embodiments, a residual unit in the NNLF may have the SLC property, that is, the first residual unit in the NNLF may be configured to extract image feature information of one of the luma component and the chroma component of the image to be filtered. The NNLF further includes: a second residual unit configured to extract image feature information of the other of the luma component and the chroma component of the image to be filtered. That is, the NNLF includes residual units for an image luma component and an image chroma component, respectively. In this case, a structure of a residual block contained in the residual unit for the image luma component may be the same as or different from a structure of a residual block contained in the residual unit for the image chroma component.

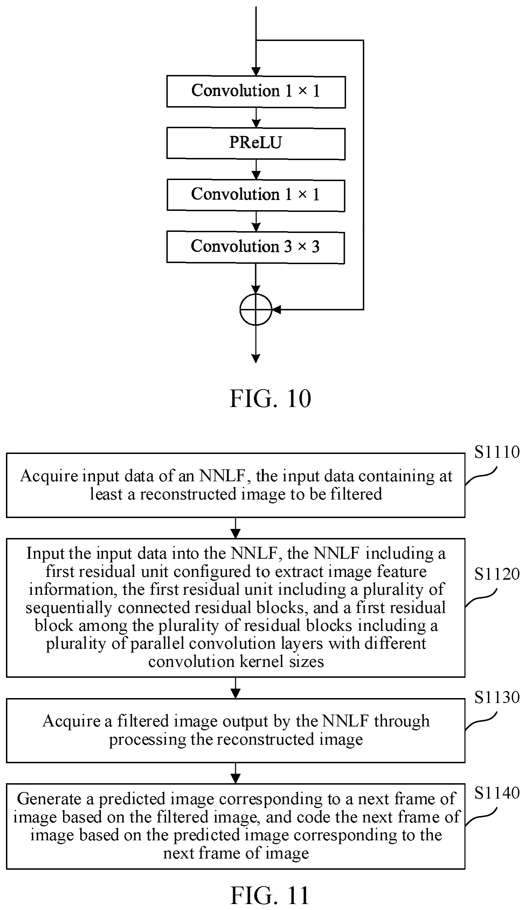

For example, the residual unit (first residual unit) for the image luma component contains the first residual block in the foregoing embodiment. The residual unit (second residual unit) for the image chroma component contains at least one of the following: a second residual block having a structure the same as that of the first residual block in the foregoing embodiment, and other residual blocks except the second residual block. In some embodiments, the residual block contained in the residual unit (first residual unit) for the image luma component is the first residual block in the foregoing embodiment. The residual block contained in the residual unit (second residual unit) for the image chroma component may select a residual block of another structure. For example, a residual block shown in FIG. 10 may be selected. The residual block shown in FIG. 10 contains a convolution layer having a convolution kernel size of 1 × 1, a PReLU, a convolution layer having a convolution kernel size of 1 × 1, and a convolution layer having a convolution kernel size of 3 × 3. The convolution kernel size shown in FIG. 10 may be adjusted according to an actual requirement, and the activation function may further adopt the ReLU or GeLU.

In some embodiments, the NNLF may further include: a shallow feature extraction unit. The shallow feature extraction unit includes at least one convolution layer and is configured to extract shallow feature information of the input data and input the shallow feature information into the residual units, for example, the first residual unit and the second residual unit.

In some embodiments, the NNLF may further include: feature mapping units configured to map the image feature information output by the residual units. In some embodiments, if the residual units in the NNLF includes the residual units for the image luma component and the image chroma component, respectively, a first feature mapping unit and a second feature mapping unit for the image luma component and the image chroma component may be set, respectively. In addition, the first feature mapping unit for the image luma component is connected to the first residual unit for the image luma component, and the second feature mapping unit for the image chroma component is connected to the second residual unit for the image chroma component.

Operation S730: Acquire a filtered image output by the NNLF through processing the reconstructed image.

In some embodiments of this application, in a training stage, sample input data configured for training the NNLF is generated based on a sample image (the sample input data is adjusted according to a usage scene of the NNLF). Then, the obtained sample input data is inputted into the NNLF, a parameter of the NNLF is adjusted according to a loss value between an output of the NNLF and an expected filtering result image corresponding to the sample image, and this process is repeated until the NNLF satisfies a convergence condition.

The technical solution of the embodiment shown in FIG. 7 may be applied to a loop filter in a video coding and decoding process. That is, loop filtering is performed in video coding and decoding through the filtering method shown in FIG. 7. Alternatively, the technical solution of the embodiment shown in FIG. 7 may be applied to post-processing of a video or an image. That is, an image obtained by decoding by a video playback client, an image obtained by photographing by a terminal device, or another image is filtered.

Based on the filtering method based on a neural network shown in FIG. 7, the embodiments of this application further propose a video coding method. The video coding method may be performed by a device having a computing processing function, such as a terminal device or a server. A specific procedure is shown in FIG. 11 and includes the following operation S1110 to operation S1140.

Operation S1110: Acquire input data of an NNLF, the input data including at least a reconstructed image to be filtered.

Specific implementation details of this operation may refer to operation S710. Details are not described herein again.

Operation S1120: Input the input data into the NNLF, the NNLF including a first residual unit configured to extract image feature information, the first residual unit including a plurality of sequentially connected residual blocks, and a first residual block among the plurality of residual blocks including a plurality of parallel convolution layers with different convolution kernel sizes.

Specific implementation details of this operation may refer to operation S720. Details are not described herein again.

Operation S1130: Acquire a filtered image output by the NNLF through processing the reconstructed image.

Specific implementation details of this operation may refer to operation S730. Details are not described herein again.

Operation S1140: Generate a predicted image corresponding to a next frame of image based on the filtered image, and code the next frame of image based on the predicted image corresponding to the next frame of image.

In some embodiments, after the filtered image is obtained, referring to the procedure shown in FIG. 3, the filtered image of the reconstructed image is used as a reference image of the next frame of image for motion estimation and motion compensation prediction. Then, a predicted image of the next frame of image is obtained based on a motion compensation prediction result and an intra prediction result, and the procedure shown in FIG. 3 continues to be repeated until the video image is completely coded.

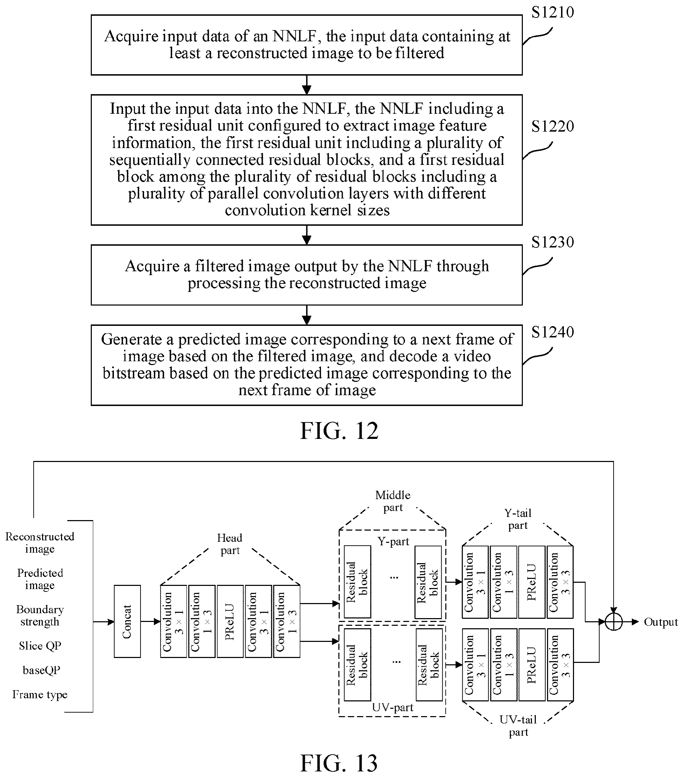

Accordingly, based on the filtering method based on a neural network shown in FIG. 7, the embodiments of this application further propose a video decoding method. The video decoding method may be performed by a device having a computing processing function, such as a terminal device or a server. A specific procedure is shown in FIG. 12 and includes the following operation S1210 to operation S1240.

Operation S1210: Acquire input data of an NNLF, the input data including at least a reconstructed image to be filtered.

Specific implementation details of this operation may refer to operation S710. Details are not described herein again.

Operation S1220: Input the input data into the NNLF, the NNLF including a first residual unit configured to extract image feature information, the first residual unit including a plurality of sequentially connected residual blocks, and a first residual block among the plurality of residual blocks including a plurality of parallel convolution layers with different convolution kernel sizes.

Specific implementation details of this operation may refer to operation S720. Details are not described herein again.

Operation S1230: Acquire a filtered image output by the NNLF through processing the reconstructed image.

Specific implementation details of this operation may refer to operation S730. Details are not described herein again.

Operation S1240: Generate a predicted image corresponding to a next frame of image based on the filtered image, and decode a video bitstream based on the predicted image corresponding to the next frame of image.

In some embodiments, after the filtered image of the reconstructed image is obtained, the filtered image of the reconstructed image may be used as a reference image of the next frame for motion estimation and motion compensation prediction, and then the predicted image of the next frame of image is obtained based on a motion compensation prediction result and an intra prediction result. The predicted image of the next frame of image and a reconstructed residual signal obtained by performing inverse quantization and inverse transform are superimposed again to generate a reconstructed image of the next frame, and this process is repeated, to decode the video bitstream.

Hereinafter, implementation details that are not exhaustive in the embodiments of this application will be described again with reference to FIG. 13 to FIG. 17.

In the embodiments of this application, a filtering solution based on a neural network is proposed. A novel NNLF structure may be designed using modes such as SLC, multi-scale receptive fields, and CPD, thereby achieving a good balance between coding performance and operation complexity. The solution may be applied to a video codec or a video preprocessing and post-processing product.

In some embodiments, FIG. 13 shows a structure of an NNLF according to an embodiment of this application. The NNLF includes an input part, a head part, a middle part, a tail part, and an output part.

In some embodiments, the input part of the NNLF may contain two parts: image information and side information. The image information contains a reconstructed image to be filtered (reconstruction), a predicted image (prediction) corresponding to the reconstructed image to be filtered, and boundary strength to provide main image content for filtering of a coded/decoded reconstructed image. The side information contains sliceQP, baseQP, and IPB. The sliceQP and the baseQP are configured for representing a QP and a distortion level of the reconstructed image to be filtered, and the IPB is configured for representing a coding type (i.e., which one of the I frame, the P frame, and the B frame) of the reconstructed image to be filtered.

The input part of the NNLF includes but is not limited to the foregoing several types of information. In addition, the reconstructed image to be filtered in the input part of the NNLF is necessary, and other information may be deleted or added according to an actual requirement.

In some embodiments, the head part of the NNLF is configured for extracting shallow feature information of the input data and may include two $1 \times 3$, two $3 \times 1$, and one PReLU activation layer. The input data is concatenated and transmitted to a head module of the NNLF for feature extraction to acquire shallow feature representation.

In some embodiments, the middle part of the NNLF is an important backbone structure of a network and may contain a plurality of residual blocks (ResBlock). In some embodiments, the middle part may adopt an SLC form, that is, the luma component and the chroma component are separately processed using different modules Y-Part and UV-Part.

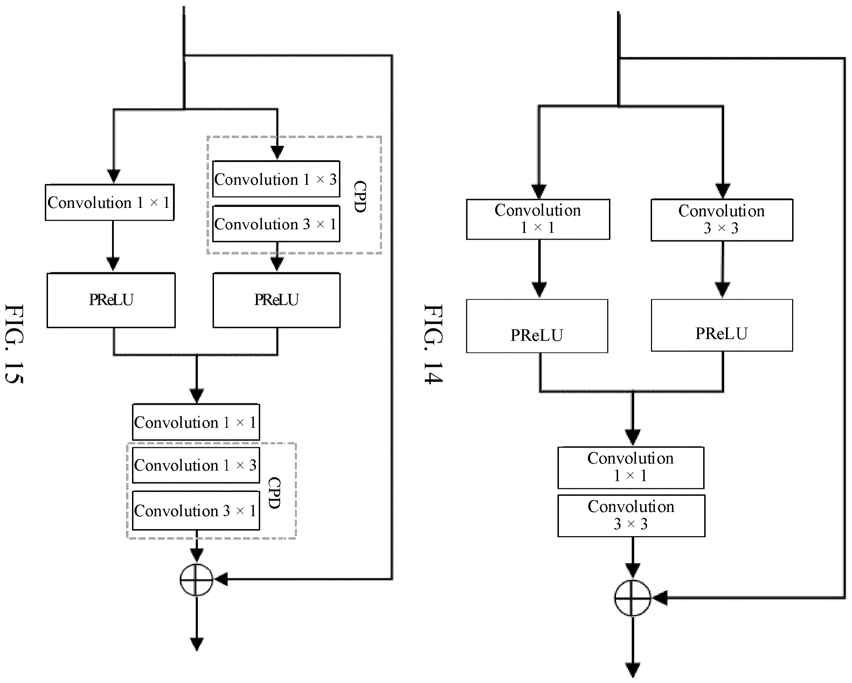

In some embodiments of this application, a structure of the residual block may be shown in FIG. 14. A $3 \times 3$ convolution and a $1 \times 1$ convolution are jointly adopted to acquire multi-scale receptive field information.

In some embodiments of this application, a structure of the residual block may be shown in FIG. 15. A $3 \times 3$ convolution is decomposed into a $3 \times 1$ convolution and a $1 \times 3$ convolution based on the CPD principle.

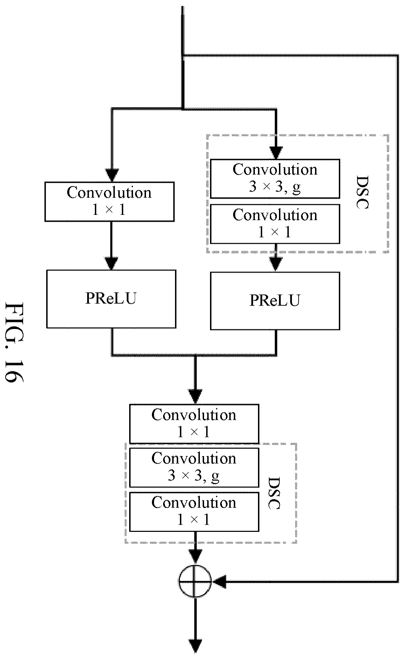

In some embodiments of this application, a structure of the residual block may be shown in FIG. 16. The DSC is adopted to decompose a $3 \times 3$ convolution into a $3 \times 3$ convolution performing group convolution and a $1 \times 1$ convolution, where g represents using group convolution. That is, convolutions within a specified channel range use the same parameter.

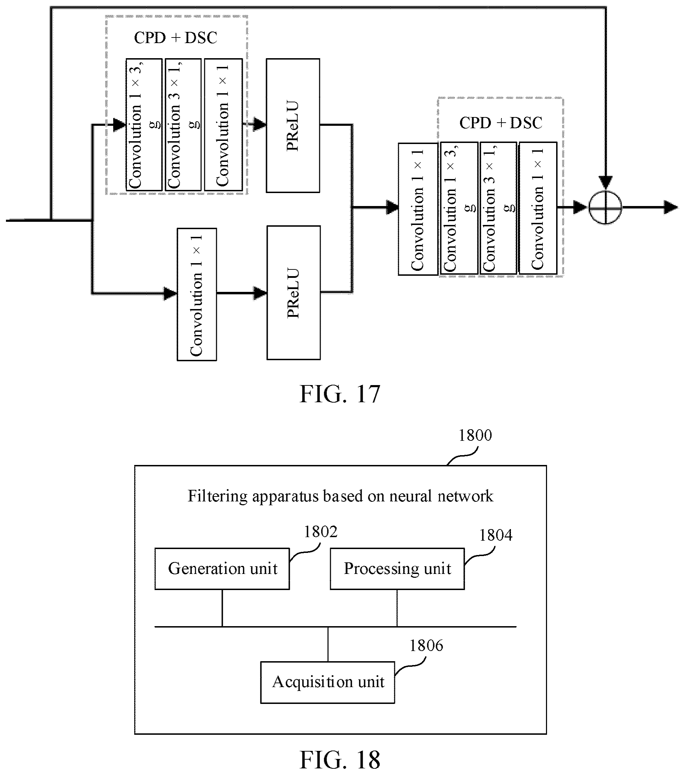

In some embodiments of this application, a structure of the residual block may be shown in FIG. 17. The CPD and the DSC are adopted simultaneously to decompose a $3 \times 3$ convolution into a $1 \times 3$ convolution performing group convolution, a $3 \times 1$ convolution performing group convolution, and a $1 \times 1$ convolution, where g represents using group convolution. That is, convolutions within a specified channel range use the same parameter.

Residual blocks contained in the Y-Part and the UV-Part in the middle part shown in FIG. 13 may adopt any one of the structures in FIG. 14 to FIG. 17, or some of the residual blocks adopt any one of the structures in FIG. 14 to FIG. 17. For example, the Y-Part includes four residual blocks, and the four residual blocks all adopt the structure shown in FIG. 14. Alternatively, two of the four residual blocks adopt the structure shown in FIG. 15, and the other two adopt the structure shown in FIG. 16.

In some embodiments, the number and/or structures of residual blocks contained in the Y-Part and the UV-Part may be the same or may be different. For example, different residual blocks are used in the Y-Part and the UV-Part in the middle part. For example, one or several residual blocks shown in FIG. 14 to FIG. 17 may be used in the Y-Part, and another residual block is used in the UV-Part, for example, the residual block shown in FIG. 10.

In some embodiments, still referring to FIG. 13, to correspond to the SLC of the middle part, a tail network of the NNLF may further adopt the SLC form to separately acquire a luma filtering image and a chroma filtering image. In some embodiments, the tail part may contain three convolution layers and one PReLU activation layer to map feature information with a relatively large number of channels to image information with a relatively small number of channels.

In some embodiments, the reconstructed image to be filtered (reconstruction) inputted by the NNLF and a residual obtained by network learning are added to obtain a final output of the network, i.e., a filtered image. That is, in the NNLF structure shown in FIG. 13, the neural network is configured to learn residual data. In this way, since a data volume of the residual data is relatively small, the processing efficiency of the neural network may be accelerated. In other embodiments of this application, an output of the tail network of the NNLF may alternatively be directly used as an output of the NNLF. In this way, the NNLF learns the difference between images before and after filtering.

The structure of the residual block and the convolution kernel size in this embodiment of this application are merely examples, and in other embodiments of this application, may be adjusted according to an actual application scene.

Apparatus embodiments of this application are described below. The apparatus embodiments may be configured for performing the methods in the foregoing embodiments of this application. Details that are not disclosed in the apparatus embodiments of this application may refer to the foregoing method embodiments of this application.

FIG. 18 is a block diagram of a filtering apparatus based on a neural network according to some embodiments of this application. The filtering apparatus based on a neural network may be applied to a device having a computing processing function, such as a terminal device or a server.

Referring to FIG. 18, a filtering apparatus 1800 based on a neural network according to some embodiments of this application includes: a generation unit 1802, a processing unit 1804, and an acquisition unit 1806.

The generation unit 1802 is configured to acquire input data of an NNLF, the input data including at least a to-be-filtered image. The processing unit 1804 is configured to input the input data into the NNLF, the NNLF including a first residual unit configured to extract image feature information, the first residual unit including a plurality of sequentially connected residual blocks, and a first residual block among the plurality of residual blocks including a plurality of parallel convolution layers with different convolution kernel sizes. The acquisition unit 1806 is configured to acquire a filtered image output by the NNLF through processing the image to be filtered.

The specific functions and structures of the foregoing units may refer to the foregoing embodiments and are not described herein again.

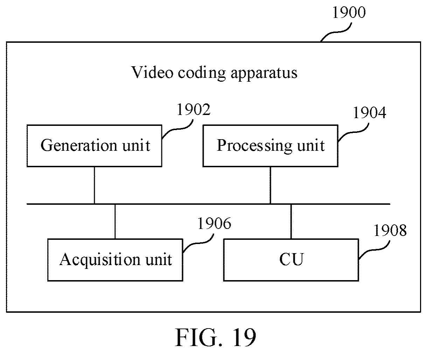

FIG. 19 is a block diagram of a video coding apparatus according to some embodiments of this application. The video coding apparatus may be applied to a device having a computing processing function, such as a terminal device or a server.

Referring to FIG. 19, a video coding apparatus 1900 according to some embodiments of this application includes: a generation unit 1902, a processing unit 1904, an acquisition unit 1906, and a CU 1908.

The generation unit 1902 is configured to acquire input data of an NNLF, the input data including at least a reconstructed image to be filtered. The processing unit 1904 is configured to input the input data into the NNLF, the NNLF including a first residual unit configured to extract image feature information, the first residual unit including a plurality of sequentially connected residual blocks, and a first residual block among the plurality of residual blocks including a plurality of parallel convolution layers with different convolution kernel sizes. The acquisition unit 1906 is configured to acquire a filtered image output by the NNLF through processing the reconstructed image. The CU 1908 is configured to generate a predicted image corresponding to a next frame of image based on the filtered image and code the next frame of image based on the predicted image corresponding to the next frame of image.

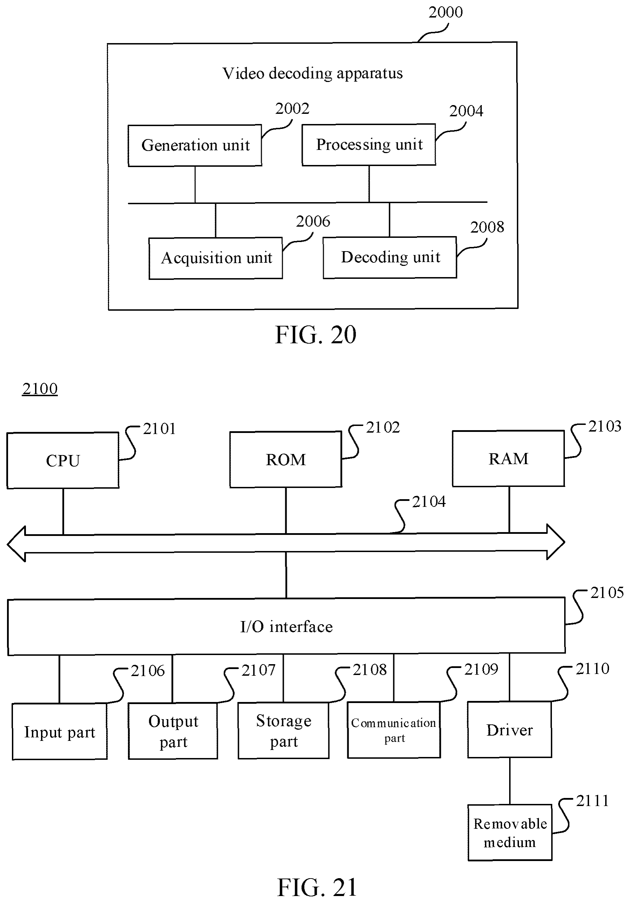

FIG. 20 is a block diagram of a video decoding apparatus according to some embodiments of this application. The video decoding apparatus may be applied to a device having a computing processing function, such as a terminal device or a server.

Referring to FIG. 20, a video decoding apparatus 2000 according to some embodiments of this application includes: a generation unit 2002, a processing unit 2004, an acquisition unit 2006, and a decoding unit 2008.

The generation unit 2002 is configured to acquire input data of an NNLF, the input data including at least a reconstructed image to be filtered. The processing unit 2004 is configured to input the input data into the NNLF, the NNLF including a first residual unit configured to extract image feature information, the first residual unit including a plurality of sequentially connected residual blocks, and a first residual block among the plurality of residual blocks including a plurality of parallel convolution layers with different convolution kernel sizes. The acquisition unit 2006 is configured to acquire a filtered image output by the NNLF through processing the reconstructed image. The decoding unit 2008 is configured to generate a predicted image corresponding to a next frame of image based on the filtered image and decode a video bitstream based on the predicted image corresponding to the next frame of image.

FIG. 21 is a schematic structural diagram of a computer system of an electronic device adapted to implement an embodiment of this application.

A computer system 2100 of the electronic device shown in FIG. 21 is merely an example and does not constitute any limitation on functions and use ranges of the embodiments of this application.

As shown in FIG. 21, the computer system 2100 may include a central processing unit (CPU) 2101, which may perform various suitable actions and processing according to a program stored in a read-only memory (ROM) 2102 or a program loaded from a storage part 2108 into a random access memory (RAM) 2103, for example, perform the methods described in the foregoing embodiments. The RAM 2103 further stores various programs and data required for system operations. The CPU 2101, the ROM 2102, and the RAM 2103 are connected to each other through a bus 2104. An input/output (I/O) interface 2105 is further connected to the bus 2104.

The following components may be connected to the I/O interface 2105: an input part 2106 including a keyboard, a mouse, and the like; an output part 2107 including a cathode ray tube (CRT), a liquid crystal display (LCD), a speaker, and the like; a storage part 2108 including a hard disk and the like; and a communication part 2109 including a network interface card such as a local area network (LAN) card and a modem. The communication part 2109 performs communication processing via a network such as the Internet. A driver 2110 is further connected to the I/O interface 2105 according to needs. A removable medium 2111, such as a magnetic disk, an optical disc, a magneto-optical disk, or a semiconductor memory, is installed on the drive 2110 according to needs so that a computer program read from the removable medium is installed into the storage part 2108 according to needs.

Particularly, according to the embodiments of this application, the processes described above with reference to the flowcharts may be implemented as computer software programs. For example, the embodiments of this application include a computer program product. The computer program product includes a computer program carried on a computer-readable medium, and the computer program is configured for performing the methods shown in the flowcharts. In such an embodiment, the computer program may be downloaded and installed from a network through the communication part 2109, and/or installed from the removable medium 2111. When the computer program is executed by the CPU 2101, the various functions defined in the system of this application are executed.

In another aspect, this application further provides a computer-readable medium. The computer-readable medium may be contained in the electronic device described in the foregoing embodiments, or may exist alone without being assembled into the electronic device. The foregoing computer-readable medium carries one or more computer programs. The one or more computer programs, when executed by the electronic device, cause the electronic device to implement the methods described in the foregoing embodiments.

Although several modules or units of a device configured to perform actions are mentioned in the foregoing detailed description, such division is not mandatory. Actually, according to the implementations of this application, the features and functions of two or more modules or units described above may be embodied in one module or unit. On the contrary, the features and functions of one module or unit described above may be further divided to be embodied by a plurality of modules or units.

According to the foregoing descriptions of the implementations, a person skilled in the art may readily understand that the exemplary implementations described herein may be implemented through software, or may be implemented by combining software and necessary hardware. Therefore, the technical solutions according to the implementations of this application may be embodied in a form of a software product. The software product may be stored in a non-volatile storage medium (which may be a CD-ROM, a USB flash drive, a removable hard disk, or the like) or on the network, and includes several instructions to cause an electronic device (which may be a personal computer, a server, a touch terminal, a network device, or the like) to perform the methods according to the implementations of this application.

After considering the specification and practicing the implementations disclosed herein, a person skilled in the art may easily conceive of other implementations of this application. This application is intended to cover any variations, uses, or adaptive changes of this application. These variations, uses, or adaptive changes follow the general principles of this application and include common general knowledge or common technical means in the art, which are not disclosed in this application.

### Claims

1. A filtering method based on a neural network loop filter (NNLF), performed by a device having a computing processing function, the method comprising:

    acquiring input data of the NNLF, the input data including at least an image to be filtered;
    inputting the input data into the NNLF, the NNLF comprising a first residual unit configured to extract image feature information, the first residual unit comprising a plurality of sequentially connected residual blocks, and a first residual block among the plurality of residual blocks comprising a plurality of parallel convolution layers with different convolution kernel sizes; and
    acquiring a filtered image output by the NNLF through processing the image to be filtered.

2. The method according to claim 1, wherein the input data further comprises at least one piece of the following information:
   boundary strength information, a slice quantization parameter (QP), a base QP, a frame type of the image to be filtered, and a predicted image corresponding to the image to be filtered when the image to be filtered is a reconstructed image.

3. The method according to claim 1, wherein the plurality of convolution layers comprises a first convolution layer and a second convolution layer; and the first residual block further comprises: a first activation function layer connected to the first convolution layer, a second activation function layer connected to the second convolution layer, and a third convolution layer and a fourth convolution layer sequentially connected,
   wherein an input end of the first convolution layer is connected to an input end of the second convolution layer and used as an input end of the first residual block, and an output end of the first activation function layer is connected to an output end of the second activation function layer and then connected to an input end of the third convolution layer; and input data of the first residual block and output data of the fourth convolution layer are superimposed as output data of the first residual block.

4. The method according to claim 3, wherein a convolution kernel size of the first convolution layer is n × n; and a convolution kernel size of the second convolution layer is m × m, m and n are positive integers, and m ≠ n.

5. The method according to claim 3, wherein the first convolution layer comprises: two sub-convolution layers obtained by decomposing a convolution layer having a convolution kernel size of n × n through tensor decomposition; and a convolution kernel size of the second convolution layer is m × m, m and n are positive integers, and m ≠ n.

6. The method according to claim 5, wherein the two sub-convolution layers comprise: a first sub-convolution layer having a convolution kernel size of $1 \times n$, and a second sub-convolution layer having a convolution kernel size of $n \times 1$.

7. The method according to claim 3, wherein the first convolution layer comprises: two sub-convolution layers obtained by decomposing a convolution layer having a convolution kernel size of $n \times n$ through depth-wise separable convolution (DSC); and a convolution kernel size of the second convolution layer is $m \times m$, m and n are positive integers, and $m \neq n$.

8. The method according to claim 7, wherein the two sub-convolution layers comprise: a third sub-convolution layer having a convolution kernel size of $n \times n$ and performing group convolution, and a fourth sub-convolution layer having a convolution kernel size of $1 \times 1$.

9. The method according to claim 3, wherein the first convolution layer comprises: three sub-convolution layers obtained by decomposing a convolution layer having a convolution kernel size of $n \times n$ through tensor decomposition and DSC; and a convolution kernel size of the second convolution layer is $m \times m$, m and n are positive integers, and $m \neq n$.

10. The method according to claim 9, wherein the three sub-convolution layers comprise: a fifth sub-convolution layer having a convolution kernel size of $1 \times n$ and performing group convolution, a sixth sub-convolution layer having a convolution kernel size of $n \times 1$ and performing group convolution, and a seventh sub-convolution layer having a convolution kernel size of $1 \times 1$.

11. The method according to any one of claims 3 to 10, wherein the fourth convolution layer comprises any one of the following:

   a convolution layer having a convolution kernel size of $k \times k$;
   two sub-convolution layers obtained by decomposing the convolution layer having the convolution kernel size of $k \times k$ through the tensor decomposition;
   two sub-convolution layers obtained by decomposing the convolution layer having the convolution kernel size of $k \times k$ through the DSC; and
   three sub-convolution layers obtained by decomposing the convolution layer having the convolution kernel size of $k \times k$ through the tensor decomposition and the DSC,
   wherein k is a positive integer.

12. The method according to any one of claims 1 to 10, wherein the first residual unit is configured to extract image feature information of one of a luma component and a chroma component of the image to be filtered; and the NNLF further comprises a second residual unit configured to extract image feature information of the other of the luma component and the chroma component of the image to be filtered, wherein the second residual unit contains a plurality of sequentially connected residual blocks, and structures of the plurality of residual blocks are the same as or different from structures of the residual blocks contained in the first residual unit.

13. The method according to claim 12, wherein the first residual unit is configured to extract the image feature information of the luma component of the image to be filtered, and the second residual unit is configured to extract the image feature information of the chroma component of the image to be filtered; and the second residual unit contains at least one of the following: a second residual block having a structure the same as that of the first residual block, and other residual blocks except the second residual block.

14. The method according to claim 12, wherein the NNLF further comprises:
   a shallow feature extraction unit, wherein the shallow feature extraction unit comprises at least one convolution layer and is configured to extract shallow feature information of the input data and input the shallow feature information into the first residual unit and the second residual unit.

15. The method according to claim 12, wherein the NNLF further comprises: a first feature mapping unit configured to map the image feature information output by the first residual unit, and a second feature mapping unit configured to map the image feature information output by the second residual unit, wherein the first feature mapping unit is connected to the first residual unit, and the second feature mapping unit is connected to the second residual unit.

16. A video coding method, performed by a device having a computing processing function, the method comprising:

   acquiring input data of a neural network loop filter (NNLF), the input data comprising at least a reconstructed image to be filtered;
   inputting the input data into the NNLF, the NNLF comprising a first residual unit configured to extract image feature information, the first residual unit comprising a plurality of sequentially connected residual blocks, and a first residual block among the plurality of residual blocks including a plurality of parallel convolution layers with different convolution kernel sizes;

acquiring a filtered image output by the NNLF through processing the reconstructed image; and

generating a predicted image corresponding to a next frame of image based on the filtered image, and coding the next frame of image based on the predicted image corresponding to the next frame of image.

17. A video decoding method, performed by a device having a computing processing function, and comprising the following operations:

acquiring input data of a neural network loop filter (NNLF), the input data comprising at least a reconstructed image to be filtered;

inputting the input data into the NNLF, the NNLF comprising a first residual unit configured to extract image feature information, the first residual unit comprising a plurality of sequentially connected residual blocks, and a first residual block among the plurality of residual blocks comprising a plurality of parallel convolution layers with different convolution kernel sizes;

acquiring a filtered image output by the NNLF through processing the reconstructed image; and

generating a predicted image corresponding to a next frame of image based on the filtered image, and decoding a video bitstream based on the predicted image corresponding to the next frame of image.

18. A filtering apparatus based on a neural network, comprising:

a generation unit configured to acquire input data of a neural network loop filter (NNLF), the input data including at least an image to be filtered;

a processing unit configured to input the input data into the NNLF, the NNLF comprising a first residual unit configured to extract image feature information, the first residual unit comprising a plurality of sequentially connected residual blocks, and a first residual block among the plurality of residual blocks comprising a plurality of parallel convolution layers with different convolution kernel sizes; and

an acquisition unit configured to acquire a filtered image output by the NNLF through processing the image to be filtered.

19. A video coding apparatus, comprising:

a generation unit configured to acquire input data of a neural network loop filter (NNLF), the input data including at least a reconstructed image to be filtered;

a processing unit configured to input the input data into the NNLF, the NNLF comprising a first residual unit configured to extract image feature information, the first residual unit comprising a plurality of sequentially connected residual blocks, and a first residual block among the plurality of residual blocks comprising a plurality of parallel convolution layers with different convolution kernel sizes;

an acquisition unit configured to acquire a filtered image output by the NNLF through processing the reconstructed image; and

a coding unit (CU) configured to generate a predicted image corresponding to a next frame of image based on the filtered image, and code the next frame of image based on the predicted image corresponding to the next frame of image.

20. A video decoding apparatus, comprising:

a generation unit configured to acquire input data of a neural network loop filter (NNLF), the input data including at least a reconstructed image to be filtered;

a processing unit configured to input the input data into the NNLF, the NNLF comprising a first residual unit configured to extract image feature information, the first residual unit comprising a plurality of sequentially connected residual blocks, and a first residual block among the plurality of residual blocks comprising a plurality of parallel convolution layers with different convolution kernel sizes;

an acquisition unit configured to acquire a filtered image output by the NNLF through processing the reconstructed image; and

a decoding unit configured to generate a predicted image corresponding to a next frame of image based on the filtered image, and decode a video bitstream based on the predicted image corresponding to the next frame of image.

21. A computer-readable medium, having a computer program stored therein, the computer program, when executed by a processor, implementing the method according to any one of claims 1 to 17.

22. An electronic device, comprising:

one or more processors; and
a memory configured to store one or more computer programs, the one or more computer programs, when executed by the one or more processors, causing the electronic device to implement the method according to any one of claims 1 to 17.

23. A computer program product, comprising a computer program, the computer program being stored in a computer-readable storage medium, and a processor of an electronic device reading the computer program from the computer-readable storage medium and executing the computer program to cause the electronic device to perform the method according to any one of claims 1 to 17.

100

140

130

Network
150

110

120

FIG. 1

FIG. 2

FIG. 3

To-be-filtered image → NNLF → Filtered image

**FIG. 4**

To-be-filtered Y component → Y component model → Filtered Y component

To-be-filtered UV component → UV component model → Filtered UV component

**FIG. 5**

To-be-filtered YUV component → YUV component model [ Y component part / UV component part ] → Filtered YUV component

**FIG. 6**

Acquire input data of an NNLF, the input data containing at least an image to be filtered — S710

Input the input data into the NNLF, the NNLF including a first residual unit configured to extract image feature information, the first residual unit including a plurality of sequentially connected residual blocks, and a first residual block among the plurality of residual blocks including a plurality of parallel convolution layers with different convolution kernel sizes — S720

Acquire a filtered image output by the NNLF through processing the image to be filtered — S730

**FIG. 7**

FIG. 8

FIG. 9

FIG. 10

FIG. 11

Acquire input data of an NNLF, the input data containing at least a reconstructed image to be filtered

S1210

Input the input data into the NNLF, the NNLF including a first residual unit configured to extract image feature information, the first residual unit including a plurality of sequentially connected residual blocks, and a first residual block among the plurality of residual blocks including a plurality of parallel convolution layers with different convolution kernel sizes

S1220

Acquire a filtered image output by the NNLF through processing the reconstructed image

S1230

Generate a predicted image corresponding to a next frame of image based on the filtered image, and decode a video bitstream based on the predicted image corresponding to the next frame of image

S1240

FIG. 12

FIG. 13

FIG. 14

FIG. 15

FIG. 16

FIG. 17

FIG. 18

FIG. 19

FIG. 20

FIG. 21

## INTERNATIONAL SEARCH REPORT

| International application No. |
|---|
| **PCT/CN2024/091116** |

| **A.** | **CLASSIFICATION OF SUBJECT MATTER** |
|---|---|

H04N19/117(2014.01)i

According to International Patent Classification (IPC) or to both national classification and IPC

| **B.** | **FIELDS SEARCHED** |
|---|---|

Minimum documentation searched (classification system followed by classification symbols)

IPC:H04N19/-

Documentation searched other than minimum documentation to the extent that such documents are included in the fields searched

Electronic data base consulted during the international search (name of data base and, where practicable, search terms used)

CNABS; CNTXT; CNKI: 滤波, 环形, 环路, 卷积, 可变, 动态, 变形, 尺寸, 大小, 数量, 数目, 内核, 残差, 预测, 图像; VRCNN, CNN; VEN; ENTXT; IEEE; JVET: VRCNN, CNN, filter, convolution, loop, size, number, kernel, variable, deform, residual, parallel

| **C.** | **DOCUMENTS CONSIDERED TO BE RELEVANT** | | |
|---|---|---|---|
| Category* | Citation of document, with indication, where appropriate, of the relevant passages | | Relevant to claim No. |
| PX | CN 116320492 A (GUANGZHOU INSTITUTE OF TECHNOLOGY, XIDIAN UNIVERSITY) 23 June 2023 (2023-06-23) description, paragraphs 57-115, and figure 5 | | 1-23 |
| X | DAI, Yuanying et al. "A CNN-Based In-Loop Filter with CU Classification for HEVC" *2018 IEEE Visual Communications and Image Processing (VCIP)*, 25 April 2019 (2019-04-25), ISSN: 1018-8770, text, sections I-II, figures 1-2 and table 1 | | 1-23 |
| X | CN 111194555 A (INTERDIGITAL VC HOLDINGS, INC.) 22 May 2020 (2020-05-22) description, paragraphs 30-68, and figures 1-6 | | 1-23 |
| A | CN 115914654 A (XIDIAN UNIVERSITY) 04 April 2023 (2023-04-04) entire document | | 1-23 |
| A | CN 114339219 A (ZHEJIANG DAHUA TECHNOLOGY CO., LTD.) 12 April 2022 (2022-04-12) entire document | | 1-23 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 July 2024** | **18 July 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/091116**

| Patent document cited in search report | | | Publication date (day/month/year) | Patent family member(s) | | | Publication date (day/month/year) |
|---|---|---|---|---|---|---|---|
| CN | 116320492 | A | 23 June 2023 | None | | | |
| CN | 111194555 | A | 22 May 2020 | WO | 2019046295 | A1 | 07 March 2019 |
| | | | | US | 2020213587 | A1 | 02 July 2020 |
| | | | | KR | 20240068078 | A | 17 May 2024 |
| | | | | EP | 3451670 | A1 | 06 March 2019 |
| | | | | KR | 20200040773 | A | 20 April 2020 |
| | | | | EP | 3677034 | A1 | 08 July 2020 |
| | | | | VN | 72417 | A | 25 August 2020 |
| | | | | CN | 111194555 | B | 26 April 2022 |
| CN | 115914654 | A | 04 April 2023 | None | | | |
| CN | 114339219 | A | 12 April 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310576341